# EUROPEAN PATENT APPLICATION

(11) **EP 2 966 715 A1**
(43) Date of publication of application: **13.01.2016**
(21) Application number: 14760183.5
(22) Date of filing: 06.03.2014
(51) Int. Cl.: H01M 4/86, H01M 8/10

(54) **TANTALUM-CONTAINING TIN OXIDE FOR FUEL CELL ELECTRODE MATERIAL**

(30) Priority: 06.03.2013 JP 2013044378
(71) Applicant: Mitsui Mining and Smelting Co., Ltd., Shinagawa-ku Tokyo 141-8584 (JP)
(72) Inventor: TAKAHASHI, Seiichiro, Ageo-shi Saitama 362-0021 (JP); ABE, Naohiko, Ageo-shi Saitama 362-0021 (JP); WATANABE, Hiromu, Ageo-shi Saitama 362-0021 (JP); TAKAHASHI, Susumu, Ageo-shi Saitama 362-0021 (JP); TANIGUCHI, Koji, Ageo-shi Saitama 362-0021 (JP); SUGIMOTO, Akiko, Ageo-shi Saitama 362-0021 (JP)
(74) Representative: Forstmeyer, Dietmar
(86) International application number: PCT/JP2014/055852
(87) International publication number: WO 2014/136908

(57) **Abstract**

Tantalum-containing tin oxide for a fuel cell electrode material is composed of tin oxide containing tantalum and having a tantalum content of 0.001 to 30 mol%. When analyzed by X-ray diffractometry, the tantalum-containing tin oxide has a [I_{Ta2O5}/I_{SnO2}]_{DOPE} value that is smaller than a [I_{Ta2O5}/I_{SnO2}]_{MIX} value. Tantalum is present inside the particle of tin oxide and is preferably present also on the surface of the particle in the form of an oxide. The tantalum oxide is preferably crystalline.

## Description

### Technical Field

This invention relates to tantalum-containing tin oxide for fuel cell electrode materials. The invention also relates to a fuel cell electrode catalyst composed of a catalyst supported on the tantalum-containing tin oxide and a membrane-electrode assembly and a polymer electrolyte fuel cell containing the electrode catalyst.

### Background Art

A polymer electrolyte fuel cell has a membrane-electrode assembly (hereinafter abbreviated as MEA) comprising a membrane of a proton-conducting polymer, such as a perfluoroalkyl sulfonate polymer, as a solid electrolyte that is provided on both sides thereof with electrode catalysts, one serving as an oxygen electrode (cathode) and the other as a fuel electrode (anode).

Electrode catalysts are generally composed of an electroconductive carbon material, such as carbon black, as a carrier and a noble metal catalyst of various kinds typified by platinum supported on the carrier. It is known that an electrode catalyst involves a problem that the carbon undergoes oxidative corrosion due to potential changes during operation of the fuel cell to eventually cause the supported metal catalyst to agglomerate or fall off. As a result, the performance of the fuel cell deteriorates with the operation time. The problem has been dealt with by supporting a larger quantity of the noble metal catalyst onto the carrier than is actually needed. This method, however, cannot be regarded economically advantageous.

Then, various studies have been conducted on electrode catalysts aiming at improving the performance and economical efficiency of polymer electrolyte fuel cells. For example, Patent Literature 1 (see below) proposes using an electroconductive oxide, that is non-carbonaceous material, as a carrier in place of a conventionally employed electroconductive carbon. In Patent Literature 1, tin oxide is used as a carrier of an electrode catalyst. Patent Literature 1 mentions that the tin oxide may be doped with a dopant element, such as Sb, Nb, Ta, W, In, V, Cr, Mn, and Mo.

### Citation List

### Patent Literature

Patent Literature 1: WO 2009/060582

### Summary of Invention

In Patent Literature 1, it is only niobium that is tested as a dopant element in the working examples, and there is no verification of the effectiveness of doping with other elements recited. Furthermore, the niobium-doped tin oxide carrier cannot be said to have sufficiently high electroconductivity for its surface area and is therefore incapable of satisfying both requirements: high ability to disperse the catalyst thereon and high electroconductivity as a path for electrons.

An object of the invention is to provide tantalum-containing tin oxide that is useful as a carrier for a fuel cell electrode catalyst and free from the disadvantages associated with the above mentioned conventional techniques.

As a result of extensive investigations, the inventors have found that the above problems with the conventional techniques are solved by incorporating a specific amount of tantalum into tin oxide.

The invention has been accomplished based on the above findings and provides a tantalum-containing tin oxide for a fuel cell electrode material including tin oxide containing tantalum and having a tantalum content of 0.001 mol% to 30 mol% calculated as: Ta (mol)/(Sn (mol) + Ta (mol)) × 100, and
[I_{Ta2O5}/I_{SnO2}]_{DOPE} being smaller than [I_{Ta2O5}/I_{SnO2]MIX}, wherein
I_{Ta2O5} is the integrated intensity of the peak assigned to the (001) plane of Ta₂O₅; I_{SnO2} is the integrated intensity of the peak assigned to the (110) plane of SnO₂; [I_{Ta2O5}/I_{SnO2}]_{DOPE} is defined to be a ratio of I_{Ta2O5} to I_{SnO2} obtained by analyzing the tantalum-containing tin oxide by X-ray diffractometry; and [I_{Ta2O5}/I_{SnO2}]_{MIX} is defined to be a ratio of I_{Ta2O5} to I_{SnO2} obtained by analyzing a Ta₂O₅-SnO₂ mixed powder, which has the same Ta₂O₅ to SnO₂ molar ratio as that of the tantalum-containing tin oxide as determined by elemental analysis, by X-ray diffractometry.

The invention provides an electrode catalyst for a fuel cell including the above-mentioned tantalum-containing tin oxide for a fuel cell electrode material and a catalyst supported on the surface of the tantalum-containing tin oxide.

The invention provides a membrane-electrode assembly including a pair of electrodes including an oxygen electrode and a fuel electrode and a polymer electrolyte membrane located between the pair of electrodes,
at least one of the oxygen electrode and the fuel electrode containing the above-mentioned electrode catalyst for a fuel cell,

The invention provides a polymer electrolyte fuel cell including the above mentioned membrane-electrode assembly and a separator arranged on each side of the membrane-electrode assembly.

### Brief Description of Drawings

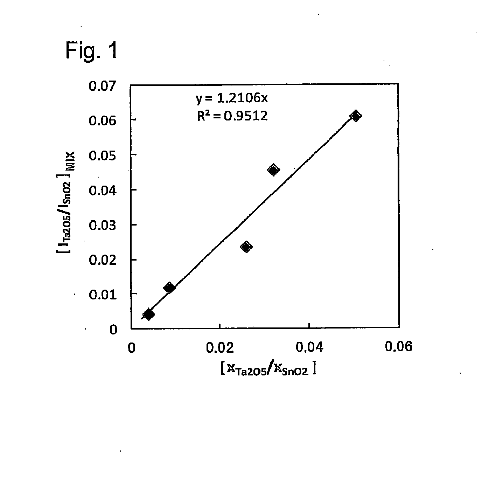

[Fig. 1] Fig. 1 is a working curve showing a relation of [I_{Ta2O5}/I_{SnO2}]_{MIX} and. [X_{Ta2O5}/X_{SnO2}].

### Description of Embodiments

The invention will be described generally based on its preferred embodiments. The tantalum-containing tin oxide for fuel cell electrode materials includes tin oxide particles containing tantalum. The tin oxide that can be used in the invention includes an oxide of tin, which is known to have high electroconductivity. Tin oxide includes SnO₂ (tetravalent tin oxide) and SnO (divalent tin oxide). To ensure acid resistance, the tin oxide for use in the invention is preferably composed mainly of SnO₂.

The tantalum-containing tin oxide of the invention is particulate. A large specific surface area will be presented when the tantalum-containing tin oxide has an average particle size D₅₀, a diameter at 50% cumulative volume in the particle size distribution measured by a laser diffraction scattering method, of 0.001 µm to 100 µm, preferably 0.005 µm to 20 µm. The tin oxide particle may have any shape that provides a large specific surface area, such as spherical, polyhedral, platy, spindle-shaped, or a mixture thereof.

Tantalum exists inside the tin oxide particle or both inside and outside the tin oxide particle. Existence of tantalum only outside the tin oxide particle does not produce the effect of the invention. In the case when tantalum exists inside the tin oxide particle, tantalum is dissolved in a solid state in tin oxide, or tantalum is present in the form of a tantalum compound (e.g., an oxide) in tin oxide. The phrase "be dissolved in a solid state in tin oxide" as used herein indicates that tin takes the place of tin in the tin oxide lattice. The form of a solid solution in tin oxide is advantageous in the interests of high electroconductivity.

When tantalum exists not only inside the tin oxide particle but outside the particle, tantalum mostly exists in the form of a tantalum compound on the surface of the tin oxide particle. For example, tantalum exists in the form of an oxide on the surface of the tin oxide particle. A tantalum oxide is exemplified by, but not limited to, Ta₂O₅.

When a tantalum compound exists outside the tin oxide particle, the compound can be crystalline or amorphous. For example, in the case when a tantalum compound is tantalum oxide, the tantalum oxide can be crystalline or amorphous but is preferably crystalline in terms of acid resistance.

To further improve the performance of the tantalum-containing tin oxide as a carrier, it is preferred for tantalum to exist not only inside the tin oxide particle but also on the surface of the tin oxide particle in the form of its oxide. In order to further ensure the improvement of electroconductivity, it is preferred for tantalum to be dissolved in the tin oxide particle in a solid state. When a tantalum oxide is present on the particle surface, a metal catalyst, such as platinum, will be supported onto the tin oxide particle in contact with the tantalum oxide, which is expected to bring about improved catalytic activity.

When tantalum exists inside the tin oxide particle in the form of a solid solution and also on the surface of the particle in the form of a crystalline oxide, the proportion of the tantalum existing on the particle surface in the form of a crystalline oxide in the total tantalum content of the tantalum-containing tin oxide of the invention is preferably less than 30 mol%, more preferably less than 10 mol%, in terms of further improving the electroconductivity of the tantalum-containing tin oxide. This proportion may be determined by, for example, the following method. Specifically, a powder of the tantalum-containing tin oxide of the invention is analyzed by XRD, and a Ta to Sn ratio is estimated from the peak area of an X-ray reflection spectrum assigned to crystalline Ta₂O₅ and that assigned to SnO₂. The proportion of the tantalum existing on the surface of particles in the form of an oxide is calculated as: Ta (mol)/(Sn (mol) + Ta (mol)) × 100.

The total tantalum content possessed by the tantalum-containing tin oxide particles, which will hereinafter be simply referred to as a tantalum content, is 0.001 mol% to 30 mol% calculated as: Ta (mol)/(Sn (mol) + Ta (mol)) × 100. With a tantalum content of 0.001 mol% or higher, the tantalum-containing tin oxide exhibits sufficiently high electroconductivity. Even if the tantalum content exceeds 30 mol%, the performance as a catalyst carrier is not improved largely, as evaluated by the method described infra. To ensure the improvement in electroconductivity and to provide a sufficiently increased specific surface area, the tantalum content is preferably 0.1 mol% to 15 mol%.

The tantalum content of the tantalum-containing tin oxide can be determined by, for example, the following method. Specifically, tantalum-containing tin oxide is dissolved by an appropriate method to obtain a solution, and the solution is analyzed by ICP emission spectroscopy to obtain the tin concentration and the tantalum concentration, from which the tantalum content is calculated. XRF (X-ray fluorescence) spectroscopy may be used in place of ICP emission spectroscopy.

The tantalum-containing tin oxide of the invention is also characterized by the results of X-ray diffractometry. In detail, the tantalum-containing tin oxide is analyzed by X-ray diffractometry to obtain the integrated intensity I_{Ta2O5} of the peak assigned to the (001) plane of Ta₂O₅ and the integrated intensity I_{SnO2} of the peak assigned to the (110) plane of SnO₂, and their ratio, [I_{Ta2O5}/I_{SnO2}]_{DOPE}, is obtained. The tantalum-containing tin oxide is also analyzed by elemental analysis to obtain the tantalum to tin molar ratio. The elemental analysis can be performed, e.g., by ICP emission spectroscopy. Separately, a plurality of mixed powders having varied Ta₂O₅ to SnO₂ molar ratios are prepared, and X-ray diffractometry is conducted on each of them to obtain the integrated intensity I_{Ta2O5} of the peak assigned to the (001) plane of Ta₂O₅ and the integrated intensity I_{SnO2} of the peak assigned to the (110) plane of SnO₂, and their ratio, [I_{Ta2O5}/I_{SnO2}]_{MIX}, is obtained to prepare a working curve of the [I_{Ta2O5}/I_{SnO2}]_{MIX} and tantalum to tin molar ratio. In powder XRD, it is known that the ratio of the diffraction peak area of the (001) plane of Ta₂O₅ to that of the (110) plane of SnO₂ is proportional to the concentration ratio of Ta₂O₅ to SnO₂ unless the tantalum is not solid-state dissolved in tin oxide (L. Alexander and H.P. Klug, Anal. Chem., 20, p 886, 1948). The [I_{Ta2O5}/I_{SnO2}]_{DOPE} value of a sample under analysis is compared with the [I_{Ta2O5}/I_{SnO2}]_{MIX} working curve. The tantalum-containing tin oxide of the invention is characterized in that the [I_{Ta2O5}/I_{SnO2}]_{DOPE} value is smaller than the [I_{Ta2O5}/I_{SnO2}]_{MIX} value, that is, the [I_{Ta2O5}/I_{SnO2}]_{DOPE} value is located below the working curve. This means that at least part of the tantalum possessed by the tantalum-containing tin oxide of the invention exists in other than the form of a crystalline Ta₂O₅. For example, tantalum may be dissolved in a solid state in the tin oxide (SnO₂) or may exist on the surface of the particulate tin oxide in the form of amorphous Ta₂O₅ or a compound other than an oxide. In any case, the tantalum-containing tin oxide of the invention has an increased specific surface area and improved electroconductivity as long as the [I_{Ta2O5}/I_{SnO2}]_{DOPE} value is smaller than the [I_{Ta2O5}/I_{SnO2}]_{MIX} value.

To ensure the increases of electroconductivity and specific surface area of the tantalum-containing tin oxide, [I_{Ta2O5}/I_{SnO2}]_{DOPE} is preferably 80% or less, more preferably 60% or less, of [I_{Ta2O5}/I_{SnO2}]_{MIX}.

The [I_{Ta2O5}/I_{SnO2}]_{DOPE} and [I_{Ta2O5}/I_{SnO2}]_{MIX} are obtained from the integrated intensities of the X ray diffraction peaks assigned to the (001) plane of Ta₂O₅ and the (110) plane of SnO₂ that are observed at 2θ of ca. 22.902° and ca. 26.611°, respectively. In X-ray diffractometry, copper may be used as a target, for example. ICSD card 41-1445 was used for the peak of SnO₂, and ICSD card 25-0922 was used for the peak of Ta₂O₅.

The tantalum-containing tin oxide of the invention has a large specific surface area. Specifically, a BET specific surface area of the tantalum-containing tin oxide of the invention is preferably 5 m²/g to 200 m²/g, more preferably of 5 m²/g to 100 m²/g. Such a large specific surface area allows a metal catalyst to be highly dispersed. A specific surface area is generally measured utilizing physical adsorption of gas, such as nitrogen, by, e.g., the BET method. The BET specific surface area may be measured using, for example, SA3100 available from Bechman Coulter or Flowsorb II available from Micromeritics.

The tantalum-containing tin oxide is advantageously produced by wet, plasma, and other processes. In the following description, wet process and plasma process are taken as an example. First, the wet process will be explained. The wet process includes providing a solution containing a tin source and a solution containing a tantalum source, forming a coprecipitate containing tin and tantalum from the solutions, and firing the coprecipitate to give desired tantalum-containing tin oxide.

Examples of the tin source compound include sodium stannate and tin chloride. The tin source compound is dissolved in a solvent such as water to prepare a solution. Examples of the tantalum source compound include tantalum chloride and tantalum alkoxides. The tantalum source compound is dissolved in a solvent, including water and a water soluble organic solvent such as ethanol, to prepare a solution. The two solutions are mixed together, and pH of the mixed solution is adjusted by a mineral acid such as nitric acid or a basic compound such as ammonia so as to form a coprecipitate, to form a coprecipitate containing tin and tantalum. These operations may be carried out at room temperature.

The coprecipitate thus formed is aged by leaving the system to stand at, for example, room temperature for a predetermined time, for example, 48 hours or less. After the aging, the mother liquid is filtered to collect the coprecipitate.

The coprecipitate is washed by repulping and dried to a solid, which was then fired in an oxygen-containing atmosphere to give desired tantalum-containing tin oxide. The oxygen-containing atmosphere is conveniently air. The firing temperature is preferably 400°C to 1200°C, more preferably 600°C to 1000°C. The firing time is preferably 1 hour to 24 hours, more preferably 1 hour to 12 hours.

In the above process, the particle size of the tantalum-containing tin oxide can be adjusted by selecting the reaction temperature for coprecipitate formation, the pH of the system for coprecipitate formation, the stirring speed of the mother liquid, and the like. The tantalum content can be adjusted by selecting a Ta to Sn concentration ratio of the mother liquid. Tantalum may be solid-state dissolved in tin oxide by setting the firing temperature to 600°C or higher. A tantalum oxide may be caused to exist on the surface of tin oxide particles by supplying tantalum in excess of the solid solubility limit or appropriately adjusting the firing temperature gradient thereby to control solid state dissolution of tantalum in tin oxide. In order to support crystalline tantalum oxide on the surface of tin oxide particles, this can be achieved by, for example, adjusting the firing temperature to 1200°C. In order to obtain [I_{Ta2O5}/I_{SnO2}]_{DOPE} which is smaller than [I_{Ta2O5}/I_{SnO2}]_{MIX}, the firing temperature may be raised to accelerate solid state dissolution of tantalum.

Next, the plasma process for producing the tantalum-containing tin oxide of the invention will be explained. The plasma process roughly includes three steps: (1) synthesis of powder for spray drying, (2) granulation by spray drying, and (3) plasma synthesis.

In step (1) synthesis of powder for spray drying, a coprecipitate containing tin and tantalum is formed from a solution containing a tin source and a solution containing a tantalum source. Examples of the tin source compound and the tantalum source compound are the same as those described with respect to the wet process. Each of the tin source compound and the tantalum source compound is dissolved in a solvent to prepare a solution. Examples of the solvent include water and a water soluble organic solvent such as ethanol. The solution containing the tantalum source is added to the solution containing the tin source. It is preferred that the pH of one or both of the solution containing the tin source and the solution containing the tantalum source be adjusted so as to form a coprecipitate. By these operations, a coprecipitate containing tin and tantalum is formed in the mixed solution. The operations may be carried out at, for example, room temperature.

Formation of a coprecipitate is followed by aging. The aging may be conducted in the same manner as in the wet process. After the aging, the coprecipitate is washed and collected by filtration. The thus collected coprecipitate is used as powder for spray drying.

In step (2) granulation by spray drying, the coprecipitate obtained in step (1) is fed to a spray dryer to be granulated. Taking into consideration smooth feed of granules to a plasma apparatus, the coprecipitate is preferably granulated with a particle size of 1 µm to 40 µm, more preferably 1 µm to 10 µm.

In step (3) plasma synthesis, the granules obtained in step (2) are fed into a DC plasma flame to produce desired tantalum-containing tin oxide. The rate of feeding the granules into a plasma flame may be, for example, 0.5 2 g/min to 2 g/min. On the condition of this feed rate, the Ar gas flow rate from the main torch preferably ranges from 4 SLM to 8 SLM, the Ar gas flow rate from the auxiliary torch preferably ranges from 0.5 SLM to 2 SLM. The output power is preferably 5 kW to 40 kW, and the flow rate of argon as a carrier gas is preferably 1 SLM to 3 SLM. "SLM" is an abbreviation for "standard liter per minute".

The tantalum-containing tin oxide obtained by the DC plasma treatment may be collected either dry or wet. When a wet collecting system is adopted, because fine particles having sublimated at superhigh temperatures can then be rapidly cooled, the tantalum-containing tin oxide particles are prevented from growing. The wet collecting system is also effective in reducing the powder resistivity of the tantalum-containing tin oxide. Prevention of particle growth and reduction of powder resistivity are beneficial for the tantalum-containing tin oxide to be used as a carrier for fuel cell catalysts. Therefore, a wet collecting system is preferred to a dry collecting system.

In the plasma process, the particle size of the tantalum-containing tin oxide can be adjusted by, for example, varying the output power or the flow rate of the gas from the main torch. That is, the plasma temperature may be elevated by increasing the output power and reducing the gas flow rate. The tantalum content can be adjusted by, for example, varying the compositional ratio of the starting materials. Dissolving tantalum in a solid state in tin oxide can be achieved by increasing the retention time of the granules in a high-temperature plasma by, for example, increasing the output power and reducing the gas flow rate from the main torch thereby to allow for sufficient sublimation. Causing a tantalum oxide to exist on the surface of the tin oxide particles can be achieved by varying the compositional ratio of the precursor so as to increase the tantalum concentration above the solid solubility limit. The same purpose may also be accomplished by suppressing sublimation of tantalum oxide by, for example, lowering the plasma temperature and preventing the granules from staying long in the plasma flame, which can be done by reducing the output power or increasing the gas flow rate from the main torch. The tantalum oxide thus precipitated in the plasma process will be detected as highly crystalline Ta₂O₅. Making the [I_{Ta2O5}/I_{SnO2}]_{DOPE} value smaller than the [I_{Ta2O5}/I_{SnO2}]_{MIX} value may be achieved by, for example, accelerating the solid-state dissolution of tantalum by using the above described manipulation.

The thus prepared tantalum-containing tin oxide may have various catalysts supported on the surface thereof to provide electrode catalysts for fuel cells. The catalysts include, but are not limited to, noble metals, such as Pt, Ir, Ag, and Pd. Oxides and carbonitrides of metals, such as Ti and Zr, are also useful. These catalysts may be used either individually or in combination of two or more thereof. In particular, elemental Pt, Ir, Ag, and Pd, which are noble metals, exhibit high oxygen reduction reaction (ORR) activity. When only pure hydrogen is used as a fuel gas, the above elemental noble metal alone suffices as a catalyst. When in using a reformed gas as a fuel gas, catalyst poisoning with CO is effectively prevented by addition of, e.g., Ru. In that case, the catalyst may take on the form of a Pt-, Ir-, Ag-, or Pd-based alloy containing, e.g., Ru as an alloying metal.

The smaller the particle size of the catalyst metal, the larger the surface area of the metal per unit mass, which is advantageous for the progress of an electrochemical reaction. However, the catalyst metal having too small a particle size has reduced catalytic performance. Taking these into consideration, the average particle size of the catalyst metal is preferably 1 nm to 10 nm, more preferably 1 nm to 5 nm.

The amount of the catalyst metal to be supported on the tantalum-containing tin oxide carrier is preferably 1 mass% to 60 mass%, more preferably 1 mass% to 30 mass%, based on the total mass of a catalyst-on-carrier (the catalyst metal and the tantalum-containing tin oxide carrier). With the amount of the catalyst metal falling within that range, a sufficient catalyst activity will be exhibited, and the catalyst metal can be supported in a highly dispersed state. The amount of the catalyst metal particles supported may be measured by, for example, ICP emission spectroscopy.

The catalyst metal is supported on the tantalum-containing tin oxide of the invention by, for example, adding the tantalum-containing tin oxide to a solution containing a catalyst metal source and heating the tantalum-containing tin oxide, on which the catalyst metal source is supported, in a reducing atmosphere. By that operation, the catalyst metal of the catalyst metal source is reduced and supported on the surface of the tantalum-containing tin oxide.

The electrode catalyst of the invention, which includes the tantalum-containing tin oxide and a catalyst metal supported on the tantalum-containing tin oxide, is used in at least one of the oxygen electrode and the fuel electrode of the MEA of a fuel cell, preferably in both the oxygen electrode and the fuel electrode. The oxygen electrode is arranged on a surface of the MEA, and the fuel electrode is arranged on other surface of the MEA.

Particularly, the oxygen electrode and the fuel electrode each preferably include a catalyst layer containing the electrode catalyst of the invention and a gas diffusion layer. In order to promote the electrode reaction smoothly, it is preferred that the electrode catalyst be in contact with the polymer electrolyte membrane. The gas diffusion layer functions as a supporting current collector having current collecting capability and also functions for feeding sufficient gas to the electrode catalyst. The gas diffusion layer for use in the invention may be of various conventional materials known for use in fuel cell technology, including carbon paper and carbon cloth, which are porous materials. For example, carbon cloth woven from yarn made of polytetrafluoroethylene-coated carbon fiber and non-coated carbon fiber at a predetermined mixing ratio may be used.

The polymer electrolyte for use in the invention may be of various conventional materials known in the art, including proton-conducting perfluoroalkyl sulfonate polymers, hydrocarbon polymers doped with an inorganic acid, such as phosphoric acid, organic/inorganic hybrid polymers partially substituted with a proton conductive functional group, and proton conductors composed of a polymer matrix impregnated with a phosphoric acid or sulfuric acid solution.

The MEA is combined on both sides thereof with a separator to make a polymer electrolyte fuel cell. The separator may have a plurality of ribs extending in a spacedly-parallel relation on the side facing the gas diffusion layer. Every pair of adjacent ribs of the separator provide a groove having a rectangular cross-sectional shape to allow a fuel gas or an oxidizing gas (such as air) to pass and be supplied to the electrodes. A fuel gas and an oxidizing gas are fed from their respective feeding means. The two separators having the MEA sandwiched in between are preferably combined with each other with their grooves perpendicular to each other. The above structure constitutes a unit cell. Several tens to several hundreds of the unit cells are stacked one on top of another to provide a fuel cell stack.

While the invention has been described based on its preferred embodiments, it should be understood that the invention is not limited to these embodiments. For example, while the embodiments described supra have been described largely with reference to use of the tantalum-containing tin oxide of the invention as a carrier for electrode catalysts of polymer electrolyte fuel cells, the tantalum-containing tin oxide may also be of use as a carrier for catalysts in other various types of fuel cells, such as alkali fuel cells and phosphoric acid fuel cells.

### Examples

The invention will now be illustrated in greater detail by way of Examples, but it should be noted that the invention is not construed as being limited thereto. Unless otherwise specified, all the percents are by mass.

Prior to going into Examples and Comparative Examples, preparation of a working curve of [I_{Ta2O5}/I_{SnO2}]_{MIX} will be described. Standard sample 1 was prepared by weighing out 4.927 g of SnO₂ powder (available from Mitsui Mining & Smelting Co., Ltd., and manufactured in Takehara Plant) and 0.073 g of Ta₂O₅ powder (available from Kojundo Chemical Laboratory Co., Ltd.) and mixing them in a mortar.

Similarly, standard samples 2 to 5 were prepared from 4.855 g of SnO₂ and 0.145 g of Ta₂O₅; 4.642 g of SnO₂ and 0.358 g of Ta₂O₅; 4.503 g of SnO₂ and 0.497 g of Ta₂O₅; and 4.300 g of SnO₂ and 0.700 g of Ta₂O₅.

Each standard sample was dissolved by an appropriate method, and the resulting solution was subjected to ICP emission analysis to obtain the mass concentration of elemental Sn and elemental Ta. Assuming that all the elemental Sn and all the elemental Ta take on the form of SnO₂ and Ta₂O₅, respectively, the ratio of Ta₂O₅ molar concentration (X_{Ta2O5}) to SnO₂ molar concentration (X_{SnO2}), i.e., [X_{Ta2O5}/X_{SnO2}], was calculated. Then, the samples were subjected to powder X-ray diffractometry to obtain the integrated intensity I_{Ta2O5} of the peak assigned to the (001) plane of Ta₂O₅ and the integrated intensity I_{SnO2} of the peak assigned to the (110) plane of SnO₂, and their ratio, [I_{Ta2O5}/I_{SnO2}]_{MIX}, is calculated therefrom. The [I_{Ta2O5}/I_{SnO2}]_{MIX} values were plotted against the [X_{Ta2O5}/X_{SnO2}] values. The resulting plot is shown in Fig. 1. When the analytical value of the samples of Examples given below is below the linear regression line of the plot, it is meant to indicate that at least part of tantalum is dissolved in a solid state in SnO₂.

### Examples 1 to 5

### (1) Synthesis of tantalum-containing tin oxide particles

Tantalum-containing tin oxide particles were synthesized by a wet process as follows. To 50 ml of ethanol was added TaCl₅ in the amount shown in Table 1 and dissolved therein to prepare five tantalum-containing solutions having different concentrations. Separately, Na₂SnO₃·3H₂O was dissolved in pure water to prepare a 0.33 mol/L tin-containing aqueous solution. To each tantalum-containing solution was added 800 ml of a 0.5 mol/L nitric acid aqueous solution, and 600 ml of the tin-containing aqueous solution was then added thereto. Upon this addition, a precipitate formed in the liquid. The mother liquid was allowed to stand for aging at 25°C for 1 hour, followed by filtration to correct a precipitate. The collected precipitate was washed by repulping and dried at 120°C for 15 hours. The resulting solid was fired in the atmosphere at each of 800°C and 1000°C for 5 hours. X-ray diffraction analysis of the product revealed that the tin oxide in the particles obtained was composed of SnO₂ having tantalum dissolved therein. The tantalum content of the tantalum-containing tin oxide particles was determined by the above described method. The value of [I_{Ta2O5}/I_{SnO2}]_{DOPE} was obtained by the above described method. The average particle size D₅₀ was obtained by the above described method. The BET specific surface area was measured using SA3100 from Bechman Coulter in Example 1 and Flowsorb II from Micromeritics in other Examples and Comparative Examples. The results obtained are shown in Table 1.

### (2) Preparation of electrode catalyst

Platinum was supported on the tantalum-containing tin oxide carrier in accordance with the method described in JP 9-47659A, but the method for supporting a catalyst component on a carrier is not limited thereto. Hereinafter, a correct example for supporting will be described. One milliliter of a 200 g/L dinitrodiamine platinum nitrate aqueous solution was prepared. Water was added thereto to make a total of 60 ml. To the aqueous solution was added 1.800 g of the tantalum-containing tin oxide particles obtained in (1) above and dispersed therein by ultrasonication. To the resulting solution was added 4 ml of ethanol, followed by causing reduction under heating at 90° to 95°C for 6 hours, whereby platinum was supported onto the surface of the tantalum-containing tin oxide particles. The particles were collected by filtration, washed, and dried at 80°C for 15 hours to give an electrode catalyst composed of the tantalum-containing tin oxide particles with platinum supported thereon. The amount of platinum supported was found to be 10% relative to the total mass of the platinum-on-carrier as measured by ICP emission spectroscopy.

### Comparative Example 1

Tantalum-free tin oxide particles were synthesized. Particles of tin oxide as a single compound were synthesized in the same manner as in Example 1, except for the conditions shown in Table 1. The BET specific surface area and average particle size D₅₀ of the resulting particles were measured by the methods described above. The results are shown in Table 1. Platinum was supported onto the resulting tin oxide particles in the same manner as in Example 1 to give an electrode catalyst composed of the tin oxide particles with platinum supported thereon.

**Table 1**

| Example | Amount of TaCl₅ Added (g) | Sn-Containing Aqueous Solution Concentration (mol/l) | Tantalum Content (%) | [I_{Ta2O5}/I_{SnO2}]_{DOPE} | D50 (µm) | BET Specific Surface Area (m²/g) | | Volume Resistivity by 4-Probe Method (Ω·cm) | | Volume Resistivity by Van der Pauw Method (Ω·cm) | | Oxygen Reduction Onset Potential (V) vs. Ag/AgCl | |
|---|---|---|---|---|---|---|---|---|---|---|---|---|---|
| | | | | | | 800°C | 1000°C | 800°C | 1000°C | 800°C | 1000°C | 800°C | 1000°C |
| 1 | 0.720 | 0.33 | 0.9 | 0 | - | 14.2 | 8.8 | 2.19E+02 | 4.18E+02 | - | - | 0.699 | 0.707 |
| 2 | 1.455 | 0.33 | 2.3 | 0 | - | 20.5 | 11.9 | 8.99E+01 | 4.39E+00 | - | - | 0.715 | 0.714 |
| 3 | 3.753 | 0.33 | 4.4 | 0 | 0.7 | 33.2 | 18.1 | 4.26E+02 | 6.10E+01 | 1.05E-01 | 2.80E-01 | 0.713 | 0.716 |
| 4 | 7.923 | 0.33 | 9.6 | 0 | - | 53.8 | 25.1 | 3.28E+03 | 2.16E+02 | - | - | 0.705 | 0.714 |
| 5 | 17.826 | 0.33 | 20.9 | 0 | - | 68.3 | 29.7 | 1.13E+05 | 7.56E+04 | - | - | - | - |
| Compa. Example 1 | 0 | 0.33 | 0 | 0 | - | 12.4 | 7.1 | 3.48E+05 | 9.07E+05 | - | - | 0.639 | 0.624 |

### Comparative Examples 2 to 5

In Comparative Examples, niobium-containing tin oxide particles were synthesized by a wet process. To 50 ml of ethanol was added NbCl₅ in the amount shown in Table 2 and dissolved therein to prepare four niobium-containing solutions having different concentrations. Separately, Na₂SnO₃·3H₂O in the amount shown in Table 2 was dissolved in pure water to prepare a 0.33 mol/L tin-containing aqueous solution. To each niobium-containing solution was added 800 ml of a 0.5 mol/L nitric acid aqueous solution, and 600 ml of the tin-containing aqueous solution was then added thereto. Upon this addition, a precipitate formed in the liquid. The mother liquid was allowed to stand for aging at 25°C for 1 hour, followed by filtration to correct a precipitate. The collected precipitate was washed by repulping and dried at 120°C for 15 hours. The resulting solid was fired in the atmosphere at each of 800°C and 1000°C for 5 hours to obtain desired niobium-containing tin oxide particles. X-ray diffraction analysis of the product revealed that the tin oxide in the particles obtained was composed of SnO₂ having niobium dissolved therein. The niobium content of the niobium-containing tin oxide particles was determined by the same method as in Example 1. The niobium content (%) is defined to be Nb (mol)/(Sn (mol) + Nb (mol)) × 100. The BET specific surface area was measured by the method described above. The results obtained are shown in Table 2.

### (2) Preparation of electrode catalyst

An electrode catalyst was made in the same manner as in Example 1. The amount of platinum supported was found to be 10% relative to the total mass of the platinum-on-carrier as measured by ICP emission spectroscopy.

**Table 2**

| Comp. Example No. | Amount of NbCl₅ Added (g) | Amount of Na₂SnO₃ Used (g) | niobium Content (%) | BET Specific Surface Area (m²/g) | | Volume Resistivity by 4-Probe Method (Ω·cm) | |
|---|---|---|---|---|---|---|---|
| | | | | 800°C | 1000°C | 800°C | 1000°C |
| 2 | 0.27 | 42.34 | 1.0 | 15.38 | 8.95 | 4.25E+03 | 1.83E+02 |
| 3 | 0.68 | 42.34 | 1.9 | 18.8 | 11.16 | 5.31E+03 | 2.73E+03 |
| 4 | 1.39 | 42.34 | 5.3 | 32.4 | 18.48 | 1.44E+04 | 2.12E+02 |
| 5 | 2.94 | 42.34 | 10.5 | 44.43 | 27.21 | 5.32E+05 | 2.06E+04 |

### Examples 6 to 9

Tantalum-containing tin oxide particles were synthesized by a plasma process.

### (1) Synthesis of powder for spray drying

In 500 ml of ethanol was dissolved 100 g of TaCl₅ to prepare an ethanolic TaCl₅ solution. SnCl₄ was dissolved in pure water to obtain 6000 g of a 60% aqueous SnCl₄ solution. The amounts shown in Table 3 of ethanolic TaCl₅ solution and the 60% aqueous SnCl₄ solution were weighed out and mixed. Pure water was added to the mixture to make a total volume of about 1.6 L. Pure water was added to 25% NH₃ (aq) to prepare 12.5% NH₃ (aq) as a neutralizing solution. The mixed solution was neutralized to a pH of 7 by the addition of the neutralizing solution. During the neutralization reaction, the liquid temperature was maintained at about 60°C. The reaction mixture was aged at ambient temperature overnight, followed by repulping with water four times, followed by filtration. The filter cake was stirred in pure water to make 5.5 L of a slurry, which was used as a slurry to be spray dried.

### (2) Granulation by spray drying

The slurry was dried and granulated using a spray dryer equipped with a two-fluid nozzle to obtain granules having a secondary particle size of about 3 to 5 µm, which were used as powder to be plasma treated. A spray dryer L-8i available from Ohkawara Kakohki Co., Ltd. was used.

### (3) Plasma synthesis

The granules obtained by the spray drying were introduced into a DC plasma flame to obtain desired tantalum-containing tin oxide particles, which were wet collected by spraying with water. The plasma synthesis was carried out using a DC plasma apparatus APS7000 available from Aeroplasma Co., Ltd. under the following conditions: Ar gas flow rate from the main torch, 8 SLM; Ar gas flow rate from the auxiliary torch, 1 SLM; output power, 9.6 kW; feed rate of granules into plasma flame, 1 to 2 g/min; and carrier gas, Ar, Ar flow rate, 2 SLM. The tantalum content of the resulting tantalum-containing tin oxide particles was determined by the method described above. The value of [I_{Ta2O5}/I_{SnO2}]_{DOPE} was obtained by the above described method. The BET specific surface area and the average particle size D₅₀ were measured by the methods described above. The results obtained are shown in Table 3. X-ray diffraction analysis of the product revealed that the tin oxide in the particles obtained was composed of SnO₂ having tantalum dissolved therein. In Examples 6 and 7, only the peak assigned to the crystalline structure of tin oxide were observed in the X-ray diffraction pattern. In Examples 8 and 9, the results of the X-ray diffraction analysis gave confirmation of the existence of crystalline Ta₂O₅ on the surface of the tin oxide particles.

### (4) Preparation of electrode catalyst

An electrode catalyst was prepared in the same manner as in Example 1. The amount of platinum supported was found to be 10% relative to the total mass of the platinum-on-carrier as measured by ICP emission spectroscopy.

**Table 3**

| Example. | Ethanolic TaCl₅ Solution (ml) | 60% SnCl₄ Solution (g) | Tantalum Content (%) | [I_{Ta2O5}/I_{SnO2}]_{DOPE} | BET Specific Surface Area (m²/g) | Volume Resistivity by Van der Pauw Method (Ω·cm) | Oxygen Reduction Onset Potential (V) vs. Ag/AgCl |
|---|---|---|---|---|---|---|---|
| 6 | 30 | 1430 | 0.47 | 0 | 71 | 7.1E-01 | 0.707 |
| 7 | 59 | 1420 | 0.89 | 0 | 70 | 4.9E-01 | 0.717 |
| 8 | 118 | 1400 | 1.84 | 0.0035 | 68 | 6.3E-02 | 0.712 |
| 9 | 262 | 1350 | 4.30 | 0.0134 | 71 | 8.1E-02 | 0.725 |

### Evaluation 1:

The volume resistivity of the particles obtained in Examples and Comparative Examples was measured. The results are shown in Tables 1 through 3. As is apparent from the results in Tables 1 through 3, while dissolution of even a small amount of tantalum in tin oxide results in reduction of volume resistivity, there is a minimum of volume resistivity reachable with the amount of dissolved tantalum. On comparing tantalum with niobium, it is also seen that tantalum brings about a lower volume resistivity with the surface area of the particles being equal. The volume resistivity was measured using the four-probe method (see below) and the Van der Pauw method (see below) in Examples 1 to 5 and Comparative Example 1; the four-probe method in Comparative Examples 2 to 5; and the Van der Pauw method in Examples 6 to 9.

### Van der Pauw method:

About one gram of tantalum-containing tin oxide particles was weighed out and uniaxially pressed into a pellet of ϕ18 × about 1 t. The pressed pellet was heated at 500°C for 3 hours in N₂. Gold was vacuum deposited on one surface of the sample at radially equally spaced four locations adjacent to the circumference to form measuring electrodes with a diameter of 1 mm. The resistivity of the sample was measured using the Van der Pauw method. The relative density of the pellet relative to SnO₂ (d = 6.95 g/cm³) was 47 to 50%.

### Four-probe method:

A resistivity meter MCP-M610 from Mitsubishi Chemical Analytech Co., Ltd. was used. A sample weighing 2.000 g was put in a measuring part of 20 mm in diameter and uniaxially pressed under a pressure of 18 kN. The volume resistivity of the sample as pressed was measured. The relative density of the sample relative to SnO₂ was 47 to 51 %.

### Evaluation 2:

The oxygen reduction onset potential of the electrode catalysts containing tantalum-containing tin oxide particles of Examples and the tin oxide particles of Comparative Example. The results are shown in Tables 1 through 3. As is apparent from these results, the electrode catalysts using the tantalum-containing tin oxide particles of Examples exhibit high ORR activity. The oxygen reduction onset potential was determined by the method below.

### Measurement of oxygen reduction onset potential:

### (1) Making of electrode

A 90.4 mg portion of each electrode catalyst obtained in Examples was weighed out. Separately, 6 ml of isopropyl alcohol was made 25 ml by adding pure water. The weighed out electrode catalyst was added to the water-containing isopropyl alcohol, and the mixture was ultrasonicated for 5 minutes. To the mixture was added 100 µl of a 5% Nafion® solution, followed by ultrasonic dispersing for 30 minutes. A 10 µl portion of the resulting dispersion was applied to a rotary disc electrode made of glassy carbon and dried at 60°C for 30 minutes to make an electrode for electrochemical measurement.

### (2) Electrochemical measurement

The oxidation-reduction reaction (ORR) activity of the catalyst was determined using an electrochemical measurement system HZ-3000 from Hokuto Denko Corp. A 0.1 N perchloric acid aqueous solution was bubbled with oxygen gas for at least 30 minutes at 25°C to be saturated with oxygen gas. The oxygen-saturated perchloric acid aqueous solution was used as an electrolytic solution. The ORR activity was determined in the potential range of from -0.20 to 1.0 V vs. Ag/AgCl at a potential scan rate of 10 mV/s. When the disc electrode was rotated at 1600 rpm, the potential at which an oxygen reduction current of -2 µA was obtained was taken as an oxidation reduction onset potential.

### Industrial Applicability

As described above, the invention provides a tantalum-containing tin oxide for fuel cell electrode materials exhibiting high electroconductivity for its surface area.

## Claims

1. Tantalum-containing tin oxide for a fuel cell electrode material comprising tin oxide containing tantalum and having a tantalum content of 0.001 mol% to 30 mol% calculated as: Ta (mol)/(Sn (mol) + Ta (mol)) × 100, and
[I_{Ta2O5}/I_{SnO2}]_{DOPE} being smaller than [I_{Ta2O5}/I_{SnO2}]_{MIX}, wherein
I_{Ta2O5} is the integrated intensity of the peak assigned to the (001) plane of Ta₂O₅; I_{SnO2} is the integrated intensity of the peak assigned to the (110) plane of SnO₂; [I_{Ta2O5}/I_{SnO2}]_{DOPE} is defined to be a ratio of I_{Ta2O5} to I_{SnO2} obtained by analyzing the tantalum-containing tin oxide by X-ray diffractometry; and [I_{Ta2O5}/I_{SnO2}]_{MIX} is defined to be a ratio of I_{Ta2O5} to I_{SnO2} obtained by analyzing a Ta₂O₅-SnO₂ mixed powder, which has the same Ta₂O₅ to SnO₂ molar ratio as that of the tantalum-containing tin oxide as determined by elemental analysis, by X-ray diffractometry.

2. The tantalum-containing tin oxide for a fuel cell electrode material according to claim 1, wherein tantalum exists inside a particle of tin oxide and also exists in the form of an oxide on the surface of the particle.

3. The tantalum-containing tin oxide for a fuel cell electrode material according to claim 2, wherein the oxide of tantalum is crystalline.

4. An electrode catalyst for a fuel cell comprising the tantalum-containing tin oxide for a fuel cell electrode material according to ay one of claims 1 to 3 and a catalyst supported on the surface of the tantalum-containing tin oxide.

5. A membrane-electrode assembly comprising a polymer electrolyte membrane and a pair of an oxygen electrode and a fuel electrode which are arranged on each surface of the polymer electrolyte membrane,
at least one of the oxygen electrode and the fuel electrode containing the electrode catalyst for a fuel cell according to claim 4.

6. A polymer electrolyte fuel cell comprising the membrane-electrode assembly according to claim 5 and a separator arranged on each side of the membrane-electrode assembly.
